# EUROPÄISCHE PATENTSCHRIFT

(11) **EP 0 655 481 B1**
(45) Veröffentlichungstag und Bekanntmachung des Hinweises auf die Patenterteilung: **05.11.2003**
(21) Anmeldenummer: 94118126.5
(22) Anmeldetag: 17.11.1994
(51) Int. Cl.: C08K 5/25, C09D 157/04, C08F 8/30

(54) **Verfahren zur Herstellung von wässrige Polymerdispersionen die als Bindemittel für blockfeste, kratzfeste und chemikalienbeständige Beschichtungen geeignet sind**
Process for the preparation of aqueous polymeric dispersions suitable for use as binders for non-blocking, scratch-resistant and chemically-resistant coatings
Procédé pour la préparation de dispersions polymériques aqueuses utilisables comme liants pour des revêtements non-agglomérants, résistants aux agents chimiques et au rayage

(30) Priorität: 30.11.1993 DE 4340648
(43) Veröffentlichungstag der Anmeldung: 31.05.1995
(73) Patentinhaber: Celanese Emulsions GmbH, 61476 Kronberg/Ts. (DE)
(72) Erfinder: Désor, Ulrich, D-65510 Idstein (DE); Krieger, Stephan, Dr., D-65719 Hofheim (DE); Kuropka, Rolf, Dr., D-65812 Bad Soden (DE); Momper, Bernhard, Dr., D-65510 Idstein (DE)
(74) Vertreter: Ackermann, Joachim, Dr., Patentanwalt Dr. Ackermann

(56) Entgegenhaltungen:
- EP-A- 0 296 487
- EP-A- 0 300 378

## Beschreibung

Gegenstand der vorliegenden Erfindung ist ein Verfahren zur Herstellung von bei Raumtemperatur selbstvernetzenden Dispersionen, die aus einer Mischung von mindestens zwei Latexpolymeren mit unterschiedlicher Glastemperatur (Tg) bestehen und ein während der Filmbildung der Dispersion wirkendes Vernetzungsmittel enthalten.

Aus EP-A-0 466 409 ist bekannt, dass man durch Mischen einer weichen Dispersion, die ein Latexpolymer mit einer Tg von kleiner 20°C besitzt, mit einer harten Dispersion, die ein Latexpolymer mit einer Tg im Bereich von 25 bis 65°C besitzt, ein Bindemittel erhält, das bei Raumtemperatur ohne Zusatz von flüchtigen organischen Lösungsmitteln zu sehr blockfesten Beschichtungen verfilmt. Ein Nachteil dieser Beschichtungen ist aber die geringe Beständigkeit gegenüber Einwirkungen von Chemikalien, beispielsweise bei Kontakt mit Reinigungsmitteln und Getränken. Ein weiterer Nachteil ist die geringe Kratzfestigkeit der beschichteten Filme.

Ferner ist aus EP-B-0 332 011 bekannt, dass man durch Mischen einer harten und durch stufenweise Emulsionscopolymerisation hergestellten Dispersion mit einer Mindestfilmbilde-Temperatur (MFT) von 65 bis 110°C und einer weicheren Dispersion mit einer MFT von 20 bis 60°C zähelastische, transparente und schleifbare Filme erhält, die zur Beschichtung von Holz besonders geeignet sind. Aufgrund der relativ hohen MFT der weicheren Dispersion muss hier aber eine größere Menge eines Filmbildehilfsmittels verwendet werden, um eine Verfilmung der entsprechenden Mischung bei Raumtemperatur sicherzustellen.

Des weiteren ist aus EP-B-0 184 091 bekannt, dass man durch mehrstufige Emulsionspolymerisation wässrige selbstvernetzende Polymerdispersionen herstellen kann, die eine niedrige MFT aufweisen und Filme mit hoher Blockfestigkeit bilden. Diese weisen jedoch Mängel bezüglich der Kratzfestigkeit auf.

Aufgabe der vorliegenden Erfindung war es nun, eine Dispersion bereitzustellen, deren MFT im Bereich von 0 bis 50°C liegt, so dass man keine oder nur geringe Mengen an Filmbildehilfsmitteln in der Lackformulierung benötigt, um eine Verfilmung bei Raumtemperatur sicherzustellen, und die zur Herstellung von Beschichtungen geeignet ist, die sowohl eine hohe Blockfestigkeit als auch eine gute Kratzfestigkeit und Chemikalienbeständigkeit gegen Haushaltschemikalien aufweist.

Es wurde nun gefunden, dass man eine geeignete Dispersion durch Mischen von mindestens einer Dispersion, die ein Carbonylgruppen-haltiges weiches Latexpolymer A enthält, und mindestens einer Dispersion, die ein hartes Latexpolymer B enthält mit einem polyfunktionellen Carbonsäurehydrazid C erhält.

Die vorliegende Erfindung betrifft also ein Verfahren zur Herstellung einer wässrigen Dispersion mit einer MFT von 0 bis 50°C, enthaltend mindestens ein Carbonylgruppen-haltiges weiches Latexpolymer A mit einer MFT unterhalb von 20°C, mindestens ein hartes Latexpolymer B mit einer MFT oberhalb von 25°C und mindestens ein polyfunktionelles Carbonsäurehydrazid C, wobei die Latexpolymere A und B in der Dispersion in einem Mengenverhältnis von 30:70 bis 70:30, vorzugsweise von 40:60 bis 60:40, vorliegen.

Gegenstand der vorliegenden Erfindung ist somit ein Verfahren zur Herstellung von bei Raumtemperatur selbstvemetzenden wässrigen Dispersionen mit einer MFT von 0 bis 50°C durch Abmischen mindestens eines carboxylgruppenhaltigen weichen Latexpolymers A mit einer MFT unterhalb von 20°C und mindestens eines harten Latexpolymers B mit einer MFT oberhalb von 25°C sowie mindestens eines polyfunktionellen Carbonsäurehydrazids C, wobei das Mengenverhältnis von A:B 70:30 bis 30:70 beträgt, und wobei
das Latexpolymer A durch Emulsionspolymerisation von jeweils gegebenenfalls auch mehreren Monomeren aus den Gruppen
a) 99 bis 60 Gew.-% Acrylsäureester, Methacrylsäureester, Styrol, Styrolderivate,
b) 0,5 bis 5 Gew.-% α,β-ungesättigte Monocarbonsäure, α,β-ungesättigte Dicarbonsäuren,
c) 0,5 bis 30 Gew.-% Carbonylgruppen-haltige α,β-ungesättigte Verbindungen,
d) 0 bis 5 Gew.-% α,β-ungesättigte Carbonsäureamide hergestellt wird
und das Latexpolymer B durch Emulsionspolymerisation von jeweils gegebenenfalls auch mehreren Monomeren aus den Gruppen
a) 99,5 bis 70 Gew.-% Acrylsäureester, Methacrylsäureester, Styrol, Styrolderivate,
b) 0,5 bis 5 Gew.-% α,β-ungesättigte Monocarbonsäuren, α,β-ungesättigte Dicarbonsäuren,
c) 0,5 bis 10 Gew.-% Carbonylgruppen-haltige α,β-ungesättigte Verbindungen,
d) 0 bis 5 Gew.-% α,β-ungesättigte Carbonsäureamide
hergestellt wird, und das molare Verhältnis der über C eingebrachten Hydrazidgruppen zur Summe der in A und B über Monomere c) eingeführten Carbonylgruppen 1:10 bis 10:1 beträgt.

Das weiche Latexpolymer A enthaltende Dispersion besitzt vorzugsweise eine MFT von 0 bis 19°C, insbesondere 5 bis 16°C. Das Latexpolymer A besteht vorzugsweise aus folgenden Monomereinheiten:
a) 99 bis 60 Gew.-%, vorzugsweise 95 bis 75 Gew.-%, Acrylsäureester und/oder Methacrylsäureester und/oder Styrol und/oder Styrolderivate,
b) 0,5 bis 5 Gew.-%, vorzugsweise 1 bis 3 Gew.-%, α,β-ungesättigte Monocarbonsäuren und/oder Dicarbonsäuren,
c) 0,5 bis 30 Gew.-%, vorzugsweise 1 bis 10 Gew.-% Carbonylgruppen-haltige α,β-ungesättigte Verbindungen,
d) 0 bis 5 Gew.-%, vorzugsweise 0 bis 3 Gew.-%, α,β-ungesättigte Carbonsäureamide.

Die das Latexpolymer B enthaltende Dispersion besitzt vorzugsweise eine MFT von größer 50°C, insbesondere von 70 bis 110°C. Das Latexpolymer B besteht vorzugsweise aus folgenden Monomereinheiten:
a) 99,5 bis 70 Gew.-%, vorzugsweise 95 bis 75 Gew.-%, Acrylsäureester und/oder Methacrylsäureester und/oder Styrol und/oder Styrolderivate,
b) 0,5 bis 5 Gew.-%, vorzugsweise 1 bis 3 Gew.-%, α,β-ungesättigte Monocarbonsäuren und/oder Dicarbonsäuren,
c) 0,5 bis 10 Gew.-% Carbonylgruppen-haltige α,β-ungesättigte Verbindungen,
d) 0 bis 5 Gew.-%, vorzugsweise 0 bis 3 Gew.-%, α,β-ungesättigte Carbonsäureamide.

Als Komponente a) eignen sich insbesondere Acryl- und Methacrylsäureester von C₁-C₁₂-Monoalkoholen, bevorzugt C₁-C₈-Monoalkoholen, beispielsweise Ethylacrylat, Isopropylacrylat, Butylacrylat, 2-Ethylhexylacrylat, Methylmethacrylat, Butylmethacrylat sowie Styrol und Alkyl-substituierte Styrole, bevorzugt Styrol und Vinyltoluol. Durch geeignete Auswahl der Anteile von bekanntermaßen weichmachenden Monomeren, beispielsweise Butylacrylat und Ethylhexylacrylat mit bekanntermaßen hartmachenden Monomeren, beispielsweise Methylmethacrylat und Styrol kann die MFT der Dispersion jeweils so eingestellt werden, dass im Fall des weichen Latexpolymers A eine MFT < 20°C, im Fall des harten Latexpolymers B eine MFT > 25°C erhalten wird. Üblicherweise verwendete hartmachende und weichmachende Monomere sowie der Einfluss der jeweiligen Mengenanteile auf die MFT der resultierenden Dispersion sind beispielsweise beschrieben in Houben-Weyl, Methoden der Organischen Chemie, 4. Auflage, Band E 20, S. 1154-1155, G. Thieme-Verlag, Stuttgart 1987.

Als α,β-ungesättigte Mono- und/oder Dicarbonsäuren b) werden vorzugsweise Methacrylsäure und Itaconsäure verwendet.

Geeignete Carbonylgruppen-haltige α,β-ungesättigte Verbindungen c) enthalten erfindungsgemäß mindestens eine Aldehyd- oder Ketofunktion, wie beispielsweise Acrolein, Methacrolein, Diacetonacrylamid, Diacetonmethacrylamid, 2-Butanonmethacrylsäureester und Acetessigsäurevinylester.

Als α,β-ungesättigte Carbonsäureamide d) werden bevorzugt Acrylamid und Methacrylamid eingesetzt.

Polyfunktionelle Carbonsäurehydrazide C, die neben den Latexpolymeren A und B ebenfalls Bestandteil der erfindungsgemäßen Dispersion sind, verfügen über mindestens zwei Hydrazidgruppen, wie beispielsweise Adipinsäuredihydrazid, Oxalsäuredihydrazid, Isophthalsäuredihydrazid und Polyacrylsäurepolyhydrazid. Die polyfunktionellen Carbonsäurehydrazide C sind im molaren Verhältnis der Hydrazidgruppen zur Summe der in A und B über Monomere c) eingeführten Carbonylgruppen von 1:10 bis 10:1, vorzugsweise 1:5 bis 5:1, in der Dispersion enthalten.

Die Herstellung der die Latexpolymere A und B enthaltenden Dispersionen erfolgt jeweils separat durch Emulsionspolymerisation. Dazu werden die Monomeren in wässriger Phase in Gegenwart von Emulgatoren und Initiatoren bei Temperaturen von 60 bis 95°C emulgiert und polymerisiert.

Die Dispersionen sollen, bezogen auf den Gehalt an Polymerisat, die üblicherweise verwendeten Mengen von bis zu 3 Gew.-%, vorzugsweise bis zu 2 Gew.-%, an ionischen Emulgatoren beziehungsweise bis zu 6 Gew.-%, vorzugsweise bis zu 4 Gew.-%, an nichtionischen Emulgatoren nicht wesentlich überschreiten. Als nichtionische Emulgatoren verwendet man beispielsweise Alkylpolyglykolether, Ethoxylierungsprodukte von Lauryl-, Oleyl- oder Stearylalkohol, von geradkettigen oder verzweigten synthetischen Alkoholen oder von wie Kokosfettalkohol, Alkylphenolpolyglykolether, beispielsweise Ethoxylierungsprodukte von Octyl- oder Nonylphenol, Diisopropylphenol, Triisopropylphenol oder von Di- oder Tri-tert.-butylphenol, oder Ethoxylierungsprodukte von Polypropylenoxid. Als ionogene Emulgatoren kommen in erster Linie anionische Emulgatoren in Frage. Es kann sich dabei um die Alkali- oder Ammoniumsalze von Alkyl-, Aryl- oder Alkylarylsulfonaten, -sulfaten, -phosphaten oder Verbindungen mit anderen anionischen Endgruppen handeln, die auch Oligo- oder Polyethylenoxid-Einheiten zwischen dem Kohlenwasserstoffrest und der anionischen Gruppe enthalten können. Typische Beispiele sind Natriumlaurylsulfat, Natriumoctylphenolglykolethersulfat, Natriumdodecylbenzolsulfonat, Natriumlauryldiglykolsulfat, Ammoniumtri-tert.-butylphenol-pentaglykolsulfat oder -oktaglykolsulfat.

Als Schutzkolloide verwendet man gegebenenfalls Naturstoffe, beispielsweise Gummiarabicum, Stärke, Alginate oder modifizierte Naturstoffe, beispielsweise Methyl-, Ethyl-, Hydroxyalkyl- oder Carboxymethylcellulose oder synthetische Substanzen, beispielsweise Polyvinylalkohol, Polyvinylpyrrolidon oder Gemische aus derartigen Stoffen. Bevorzugt können modifizierte Cellulose-Derivate und synthetische Schutzkolloide verwendet werden. Der Einsatz dieser Schutzkolloide ist jedoch bei Verwendung der beschriebenen Monomersysteme, wie dem Fachmann bekannt ist, nur beschränkt möglich. Die verwendbaren Mengen sind häufig gering, beispielsweise 0,001 bis 1 Gew.-%, und die Verträglichkeit sowie die Art der Zugabe muss von Fall zu Fall geprüft werden.

Zum Starten und Weiterführen der Polymerisation bedient man sich öl- und/oder vorzugsweise wasserlöslicher Radikalbildner oder Redoxsysteme. Es eignen sich beispielsweise Wasserstoffperoxid, Natrium-, Kalium- oder Ammoniumperoxydisulfat, Dibenzoylperoxid, Laurylperoxid, Tri-tert.-butylperoxid, Azobisisobutyronitril, allein oder zusammen mit reduzierenden Komponenten, beispielsweise Natriumbisulfit, ®Rongalit, Formaldehyd-Natriumsulfoxylat, Glucose, Ascorbinsäure und anderen reduzierend wirkenden Verbindungen.

Des weiteren können Regler, wie Mercaptane und andere übliche, dem Fachmann für die Emulsionspolymerisation bekannte Hilfsstoffe verwendet werden. Die Herstellung der hochwertigen Dispersionen gemäß der vorliegenden Erfindung setzt darüber hinaus die Anwendung der auf dem Gebiet der Emulsionspolymerisation allgemein bekannten Maßnahmen voraus, soweit sie hier nicht ohnehin beschrieben sind.

Die die Latexpolymere A und B enthaltenden Dispersionen werden erfindungsgemäß im Verhältnis 70:30 bis 30:70, vorzugsweise 60:40 bis 40:60, bezogen auf den Feststoffgehalt der jeweiligen Dispersion, so abgemischt, dass die MFT der resultierenden Polymerdispersion im Bereich von 0 bis 50°C, vorzugsweise im Bereich von 0 bis 30°C, liegt. Um besonders transparente Filme zu erhalten, können analog den Ausführungen von H. J. Biangardi, H. Sturm, G. Kostersitz in der Angew. Makromol. Chem. 183 (1990) 221 - 241 über transparente polymere Mehrphasensysteme, Latexpolymere A und B mit ähnlichen Brechungsindices und Latexteilchendurchmessern von kleiner 100 nm gemischt werden.

Das Zusammengeben der das Latexpolymer A enthaltenden Dispersion, der das Latexpolymer B enthaltenden Dispersion und des polyfunktionellen Carbonsäurehydrazids C, kann in einer beliebigen Reihenfolge erfolgen. Es ist auch möglich das polyfunktionelle Carbonsäurehydrazid C schon bei der Herstellung der jeweiligen Dispersion einer oder beiden Dispersionen zuzugeben.

Auf Basis der erfindungsgemäß hergestellten Dispersionen lassen sich Lacke zur Beschichtung von Holz oder Kunststoffen herstellen. Diese können unter Verwendung von üblichen Zusatzstoffen, wie Netzmitteln, beispielsweise Aminomethylpropanol, beispielsweise Silikone und Mineralöle, Verdickern auf Basis von Polyacrylaten oder Polyurethanen, Wachsen auf Basis von Paraffin oder Polyethylen, Filmbildehilfsmitteln, beispielsweise ®Texanol (aliphatischer Ester, Eastman) oder Butyldiglykol, Konservierungsmitteln, Mattierungsmitteln und anderen dem Fachmann bekannten Additiven hergestellt werden.

Die Vernetzung der erfindungsgemäßen Dispersion erfolgt bereits bei Raumtemperatur und bewirkt so bei ihrer Verwendung in Beschichtungssystemen verbesserte Filmeigenschaften, insbesondere die gegenüber herkömmlichen Dispersionsmischungen deutlich erhöhte Kratzfestigkeit und Blockfestigkeit.

## Patentansprüche

1. Verfahren zur Herstellung von bei Raumtemperatur selbstvernetzenden wässrigen Dispersionen mit einer MFT von 0 bis 50°C durch Abmischen mindestens eines carboxylgruppenhaltigen weichen Latexpolymers A mit einer MFT unterhalb von 20°C und mindestens eines harten Latexpolymers B mit einer MFT oberhalb von 25°C sowie mindestens eines polyfunktionellen Carbonsäurehydrazids C, wobei das Mengenverhältnis von A:B 70:30 bis 30:70 beträgt, und wobei das Latexpolymer A durch Emulsionspolymerisation von jeweils gegebenenfalls auch mehreren Monomeren aus den Gruppen
a) 99 bis 60 Gew.-% Acrylsäureester, Methacrylsäureester, Styrol, Styrolderivate,
b) 0,5 bis 5 Gew.-% α,β-ungesättigte Monocarbonsäure, α,β-ungesättigte Dicarbonsäuren,
c) 0,5 bis 30 Gew.-% Carbonylgruppen-haltige α,β-ungesättigte Verbindungen,
d) 0 bis 5 Gew.-% α,β-ungesättigte Carbonsäureamide hergestellt wird,
und das Latexpolymer B durch Emulsionspolymerisation von jeweils gegebenenfalls auch mehreren Monomeren aus den Gruppen
a) 99,5 bis 70 Gew.-% Acrylsäureester, Methacrylsäureester, Styrol, Styrolderivate,
b) 0,5 bis 5 Gew.-% α,β-ungesättigte Monocarbonsäuren, α,β-ungesättigte Dicarbonsäuren,
c) 0,5 bis 10 Gew.-% Carbonylgruppen-haltige α,β-ungesättigte Verbindungen,
d) 0 bis 5 Gew.-% α,β-ungesättigte Carbonsäureamide
hergestellt wird, und das molare Verhältnis der über C eingebrachten Hydrazidgruppen zur Summe der in A und B über Monomere c) eingeführten Carbonylgruppen 1:10 bis 10:1 beträgt.

## Claims

1. A process for the preparation of an aqueous dispersion which is autocrosslinking at room temperature, having an MFT of from 0 to 50°C, by mixing at least one carboxyl-containing, soft latex polymer A having an MFT of below 20°C and at least one hard latex polymer B having an MFT of above 25°C and also at least one polyfunctional carboxylic hydrazide C, the ratio of A to B being from 70:30 to 30:70, and the latex polymer A being prepared by emulsion polymerization of one or more monomers from each of the following groups:
a) from 99 to 60% by weight of acrylic esters, methacrylic esters, styrene and styrene derivatives,
b) from 0.5 to 5% by weight of α,β-unsaturated monocarboxylic acids and α,β-unsaturated dicarboxylic acids,
c) from 0.5 to 30% by weight of carbonyl-containing α,β-unsaturated compounds, and
d) from 0 to 5% by weight of α,β-unsaturated carboxamides
and the latex polymer B being prepared by emulsion polymerization of one or more monomers from each of the following groups:
a) from 99.5 to 70% by weight of acrylic esters, methacrylic esters, styrene and styrene derivatives,
b) from 0.5 to 5% by weight of α,β-unsaturated monocarboxylic acids and α,β-unsaturated dicarboxylic acids,
c) from 0.5 to 10% by weight of carbonyl-containing α,β-unsaturated compounds, and
d) from 0 to 5% by weight of α,β-unsaturated carboxamides, and the molar ratio of the hydrazide groups introduced via C to the sum of the carbonyl groups introduced into A and B via monomers c) being from 1:10 to 10:1.

## Revendications

1. Procédé pour la préparation de dispersions aqueuses autoréticulantes à température ambiante avec une MFT de 0 à 50°C par mélange d'un latex polymère mou présentant des groupes carboxyle avec une MFT inférieure à 20°C et au moins un latex polymère B avec une MFT supérieure à 25°C ainsi qu'au moins un hydrazide d'acide carboxylique polyfonctionnel C, le rapport quantitatif de A:B étant de 70:30 à 30:70, et
le latex polymère A étant préparé par polymérisation en émulsion, est éventuellement pris parmi plusieurs monomères du groupe
a) de 99 à 60 % en masse d'acrylate, de méthacrylate de styrène, de dérivés de styrène,
b) de 0,5 à 5 % en masse d'acides monocarboxyliques insaturés en α,β, d'acides dicarboxylique insaturés en α,β,
c) de 0,5 à 30 % en masse de composés insaturés en α,β renfermant des groupes carbonyles,
d) de 0 à 5 % en masse d'amides d'acides carboxyliques insaturés en α,β,
et le latex polymère B étant préparé par polymérisation en émulsion, est éventuellement pris parmi plusieurs monomères du groupe
a) de 99,5 à 70 % en masse d'acrylate, de méthacrylate de styrène, de dérivés de styrène,
b) de 0,5 à 5 % en masse d'acides monocarboxyliques insaturés en α,β, d'acides dicarboxylique insaturés en α,β,
c) de 0,5 à 10 % en masse de composés insaturés en α,β renfermant des groupes carbonyles,
d) de 0 à 5 % en masse d'amides d'acides carboxyliques insaturés en α,β, et le rapport molaire des groupes hydrazides apportées par C à la somme des groupes carbonyles dans A et B introduits par les monomères c) est de 1:10 à 10:1.
